# FASCICULE DE BREVET EUROPEEN

(11) **EP 0 498 693 B1**
(45) Date de publication et mention de la délivrance du brevet: **09.03.1994**
(21) Numéro de dépôt: 92400209.0
(22) Date de dépôt: 27.01.1992
(51) Int. Cl.: F16B 23/00, F16B 31/02, E05B 73/00, G02C 11/00

(54) **Vis pour dispositif antivol et dispositif antivol**
Schraube für diebstahlsichere Vorrichtung und diebstahlsichere Vorrichtung
Screw for anti-theft device and anti-theft device

(30) Priorité: 06.02.1991 FR 9101341
(43) Date de publication de la demande: 12.08.1992
(73) Titulaire: HENNERT, Société Anonyme dite:, F-75014 Paris (FR)
(72) Inventeur: Roig, Norbert, F-77590 Bois-le-Roi (FR); Augelet, Patrick, F-75011 Paris (FR)
(74) Mandataire: Phélip, Bruno

(56) Documents cités:
- FR-A- 1 424 148
- FR-A- 2 445 538
- FR-A- 2 515 366
- GB-A- 764 663
- US-A- 4 149 434

## Description

L'invention concerne les dispositifs destinés à empêcher le vol de tout objet de forme allongée tel que des lunettes, notamment dans les lieux où ces objets sont proposés en libre service.

Dans ces établissements, les lunettes sont notamment exposées sur des présentoirs d'où l'acheteur potentiel les retire pour les essayer.

Les acheteurs indélicats peuvent, après essayage, mettre la paire de lunettes choisies dans leur poche, comme si elle leur appartenait déjà.

On a déjà proposé un système antivol dans lequel l'objet de forme allongée, tel que des lunettes, est engagé. Ce système permet de bloquer l'une des branches des lunettes dans sa position ouverte au moyen d'une douille enfilée sur cette branche et butant contre la face postérieure, soit de la façade de la monture, soit de l'oculaire voisin.

Certains systèmes antivols déjà connus, basés sur ce principe, comportent comme moyen d'immobilisation de la douille sur la branche, une clavette coinçant cette dernière à l'intérieur du canal ménagé dans la douille. Ces systèmes sont très efficaces mais ne peuvent être libérés qu'avec beaucoup de difficultés. De plus, les lunettes sont des objets relativement fragiles et l'on constate que, durant l'opération de libération et même parfois à la pose du système antivol, la branche des lunettes est abîmée par la manoeuvre de coincement ou de décoincement de la clavette.

On connaît également d'autres dispositifs antivols, tel que celui décrit dans le brevet FR-2445538 qui permettent de pallier ces inconvénients. Ce dispositif antivol comprend lui aussi une douille qui comporte un orifice pour le passage de moyens d'immobilisation. Ces moyens sont constitués par une vis pointeau. Après serrage, une extrémité de la vis vient directement ou indirectement en contact avec la branche de la paire de lunettes sur laquelle le dispositif a été enfilé et permet de maintenir celui-ci sur cette branche.

On constate qu'il est alors nécessaire de prévoir une protection entre la vis et la branche pour éviter que l'extrémité de la vis n'abîme cette branche. Cet élément supplémentaire complique la réalisation du dispositif. De plus, le marquage de la branche par la vis n'est pas nécessairement évité lorsque le couple exercé sur celle-ci est très important.

Ainsi, l'invention propose une vis destinée à bloquer un système de sécurité contre le vol d'objets de forme allongée, cette vis évitant toute détérioration desdits objets.

Cependant, pour que le système de sécurité antivol soit efficace, il ne doit pas pouvoir être libéré facilement. La vis doit donc être conçue de façon à ne pas pouvoir être aisément desserrée. Ainsi, la vis proposée par l'invention est telle que sa manoeuvre est impossible ou tout au moins très difficile sans un outil particulier.

L'invention concerne une vis pour le blocage de système antivol destiné à des objets de forme allongée, constitué essentiellement par une douille percée d'un canal, ladite vis comprenant une portion cylindrique d'un premier diamètre présentant un filetage, caractérisée en ce qu'un évidement sensiblement cylindrique est pratiqué dans ladite portion cylindrique, dans lequel sont prévus des moyens avec lesquels un outil de vissage peut venir en prise, ces moyens se brisant lorsque le couple exercé par cet outil est supérieur à une valeur limite et en ce qu'une pluralité de cannelures, permettant le dévissage, est disposée autour de l'extrémité libre dudit évidement.

Selon une autre caractéristique de l'invention, les moyens sont constitués par une languette cassante, fixée à la paroi interne dudit évidement et disposée selon un diamètre dudit évidement.

Selon un premier mode particulier de réalisation de l'invention, cette languette est réalisée en une seule pièce, fixée en deux points diamétralement opposés dudit évidement.

Selon un autre mode particulier de réalisation de l'invention, cette languette est réalisée en deux parties, chacune d'elles étant fixée par une de leurs extrémités à la paroi interne dudit évidement.

Selon une autre caractéristique de l'invention, lesdits moyens sont conçus pour se briser lorsque le couple exercé par l'outil de vissage est supérieur à 1,2 kg.

De façon préférée, la vis est réalisée en une matière plastique friable. Ceci présente l'avantage d'obtenir une cassure nette des moyens lorsque le couple de vissage dépasse la valeur limite.

De préférence également, la vis est réalisée en une matière plastique homogène de façon à ne pas marquer la branche de la lunette avec laquelle une extrémité de la vis vient en contact, après serrage et immobilisation du dispositif antivol.

Selon un mode particulier de réalisation de l'invention, la vis est réalisée en polystyrène.

Selon un mode préféré de réalisation de l'invention, ledit premier diamètre n'est pas standard.

Selon un autre mode préféré de l'invention, les cannelures sont disposées selon un anneau, le diamètre extérieur dudit anneau étant inférieur ou égal audit premier diamètre.

Selon une forme de réalisation de l'invention, ladite portion cylindrique présente, du côté opposé auxdites cannelures, une forme légèrement concave.

Selon une forme supplémentaire de réalisation de l'invention, ladite portion comporte, du côté opposé auxdites cannelures, une autre portion cylindrique sensiblement lisse.

Selon un mode préféré de réalisation de l'invention, le diamètre de cette autre portion cylindrique est inférieur ou égal audit premier diamètre.

L'invention est également relative à un dispositif antivol pour tout objet de forme allongée, ledit dispositif comprenant une douille dont la partie intérieure est évidée pour permettre le passage dudit objet et des moyens d'immobilisation de ladite douille par rapport audit objet constitués par une vis selon l'invention.

L'invention est également relative à un dispositif antivol pour tout objet de forme allongée et présentant une articulation tel que des lunettes, ledit dispositif comportant une douille à enfiler sur la branche des lunettes à bloquer en position ouverte, cette douille étant pourvue d'un talon destiné à prendre appui contre la face postérieure soit de l'oculaire, soit de la façade de la monture et des moyens d'immobilisation de la douille par rapport à cette branche, de manière à ce que ce talon empêche le repliement de celle-ci, ces moyens d'immobilisation étant constitués par un organe mobile entre une position inactive et une position active dans laquelle son extrémité vient directement s'appliquer contre ladite branche, caractérisé en ce que ledit organe mobile est constitué par une vis selon l'invention.

Selon un mode préféré de réalisation de ce dispositif antivol, la douille comporte, sur la face opposée à celle du talon, une rainure destinée à recevoir les éléments d'encliquetage de supports.

L'invention sera mieux comprise et d'autres buts, avantages et caractéristiques de celle-ci apparaîtront plus clairement à la lecture de la description faite en regard des dessins annexés sur lesquels:

La Figure 1 est une vue en perspective, du côté extérieur, de lunettes pourvues d'un dispositif antivol sur lequel la vis selon l'invention peut être montée.

La Figure 2 est une vue en perspective, du côté intérieur, de lunettes pourvues d'un dispositif antivol sur lequel la vis selon l'invention peut être montée.

La Figure 3 est une vue de face d'un mode de réalisation de la vis selon l'invention.

La Figure 4 est une vue de dessus de la vis selon la Figure 3.

La Figure 5 est une vue de dessus d'un autre mode de réalisation de la vis selon l'invention.

Les éléments communs aux différentes Figures seront désignés par les mêmes références.

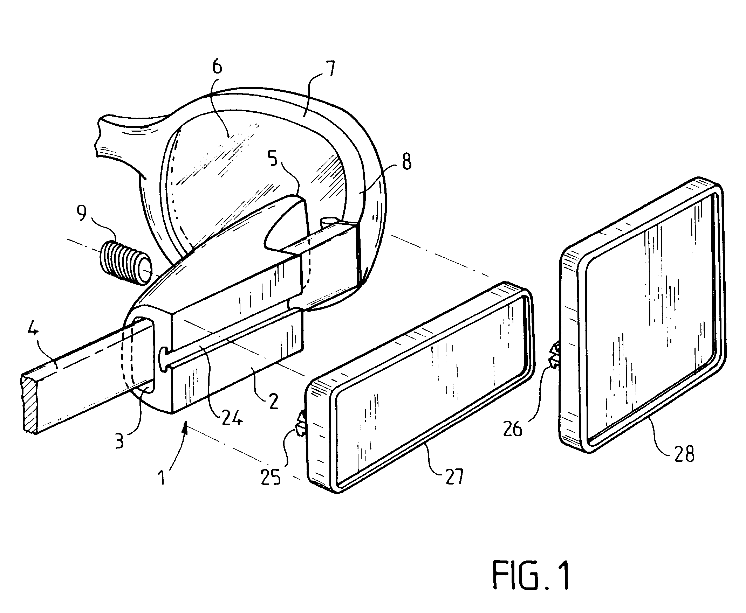

La Figure 1 montre que le dispositif antivol 1 comprend, de façon connue, une douille 2. Cette douille présente un canal 3, dans lequel la branche 4 de la lunette peut passer, de façon à enfiler le dispositif antivol 1 sur la branche. Ce dernier est également pourvu d'un talon antérieur 5 destiné à venir buter contre la face postérieure soit de l'oculaire 6, soit du cercle porte-oculaire 7, soit encore de la façade 8 de la monture.

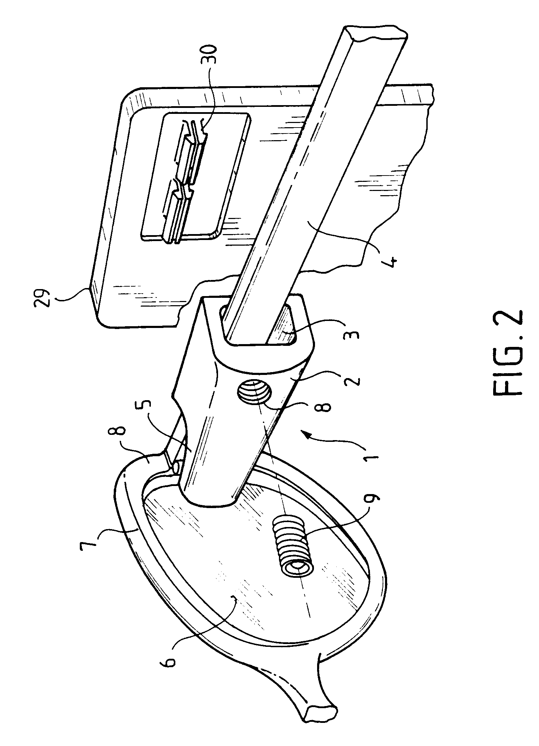

Comme le montre la Figure 2, la douille 2 comporte, sur la face commune avec le talon antérieur 5, un trou fileté 8.

Une vis 9 selon l'invention est destinée à être vissée dans le trou 8, de façon à venir en contact avec la branche 4 des lunettes, et à immobiliser la douille 2 sur celle-ci.

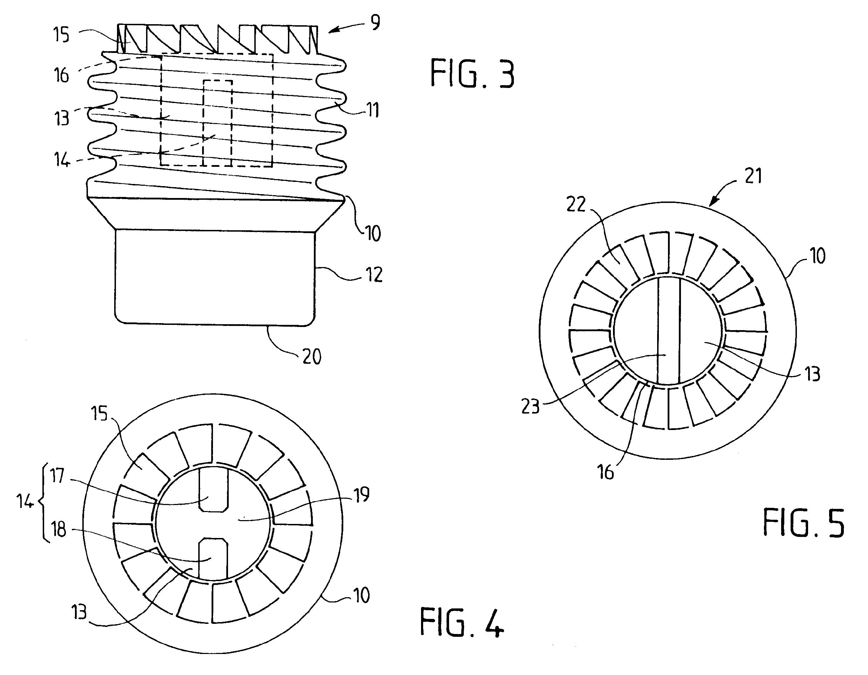

Cette vis sera décrite plus précisément en regard des Figures 3 à 5.

La Figure 3 montre que la vis selon l'invention comporte une première portion cylindrique 10, présentant un filetage 11 ainsi qu'une deuxième portion cylindrique 12, de diamètre inférieur à celui de la première partie 10 et présentant une surface extérieure sensiblement lisse.

La face inférieure 20 de cette deuxième portion cylindrique est de préférence légèrement concave. Comme on le verra par la suite, ceci contribue à éviter le marquage de l'objet sur lequel est placé un dispositif antivol qui est fixé par l'intermédiaire de la vis.

On peut noter que la présence de cette deuxième portion cylindrique 12 n'est absolument pas indispensable. Lorsqu'elle n'est pas prévue, on comprend que c'est la face inférieure de la première portion cylindrique 10 qui est, de préférence, légèrement concave.

Le diamètre de la vis est de préférence non standard. L'intérêt de cette disposition sera expliqué dans la suite de la description.

Un évidement 13 est pratiqué dans la première partie cylindrique 10. Il présente une forme sensiblement cylindrique.

A l'intérieur de cet évidement 13, sont prévus des moyens 14 qui présentent une forme telle qu'un outil de vissage peut venir en prise avec eux. Cet outil permet alors de visser la vis 9 dans le trou 8. Ces moyens 14 sont ici constitués par une languette réalisée en deux parties 17 et 18. Chacune de ces parties présente une section sensiblement rectangulaire et une longueur inférieure à celle du rayon de l'évidement 13. Elles sont disposées selon un diamètre de l'évidement et fixées à la paroi interne de celui-ci par une de leurs extrémités. Ainsi, un intervalle 19 est ménagé entre les deux parties 17 et 18 de la languette 14.

Un outil de vissage, destiné à venir en prise avec cette languette 14, n'est pas représenté sur les Figures mais on comprend qu'il doit présenter une forme cylindrique dont le diamètre extérieur est inférieur au diamètre intérieur de l'évidement 13 et deux évidements dont la forme correspond sensiblement à celle des parties 17 et 18 de la languette 14 de façon à pouvoir pénétrer dans l'évidement 13 et venir en prise avec la languette 14.

La vis 9 selon l'invention comporte de plus une pluralité de cannelures 15 qui sont disposées autour de l'extrémité libre 16 de l'évidement 13. Ainsi, ces cannelures 15 sont disposées selon un anneau dont le diamètre extérieur est inférieur ou égal à celui de la première portion 10 de la vis et dont le diamètre intérieur est supérieur ou égal à celui de l'évidement 13. Ces cannelures sont destinées à permettre le desserrage de la vis 9 après que celle-ci a été vissée, par exemple dans le trou fileté 8.

La vis selon l'invention, qui est illustrée aux Figures 3 et 4, présente seize cannelures radiales.

La Figure 5 illustre un autre mode de réalisation de la vis selon l'invention. La vis 21 diffère de la vis 9 illustrée aux Figures 3 et 4 par les dimensions et le nombre des cannelures radiales 22 disposées autour du bord extérieur de l'évidement 13, pratiqué dans la première partie cylindrique 10. Ces cannelures sont de dimensions moins importantes et au nombre de vingt-quatre.

De plus, les moyens avec lesquels un outil de vissage est destiné à venir en prise sont constitués par une languette 22 réalisée en une seule pièce, disposée selon un diamètre de l'évidement 13.

Un outil de vissage, destiné à venir en prise avec la languette 23, n'est pas représenté sur les Figures. On comprend qu'il présente une forme cylindrique de diamètre inférieur au diamètre intérieur de l'évidement 13 et un évidement dont la forme correspond à celle de la languette 23. L'outil peut ainsi pénétrer dans l'évidement 13 et venir en prise avec la languette 23, pour visser la vis 21 dans le trou 8 pratiqué dans la douille 2.

Les moyens avec lesquels l'outil de vissage vient en prise sont conçus de façon à casser lorsque le couple appliqué par l'outil de vissage est supérieur à une valeur limite déterminée. En fonction de la valeur choisie, on détermine les dimensions de ces moyens. On détermine en particulier l'épaisseur et la hauteur des languettes 14 et 23.

Cette valeur limite correspond à celle qui est nécessaire pour empêcher un desserrage aisé ou encore accidentel de la vis, et pour que la vis vienne en contact avec la branche 4 des lunettes tout en ne marquant pas celle-ci lorsque le contact est réalisé entre la branche 4 et la vis.

La matière choisie pour réaliser la vis doit être une matière plastique friable de façon à casser nettement. Cette matière peut être du polystyrène.

De plus, cette matière est de préférence homogène, pour contribuer à la non-détérioration de la branche des lunettes lorsque la vis vient en contact avec celle-ci.

La matière de la vis est la même que celle de la languette, la vis et tous ses éléments étant réalisés par moulage.

Le fonctionnement de la vis selon l'invention va maintenant être décrit.

On introduit, dans l'évidement 13, un outil de vissage dont la forme est adaptée à celle des moyens 14, 23 prévus dans l'évidement 13. Cet outil vient donc en prise avec ces moyens. La vis est alors introduite dans le trou fileté 8 et un couple est appliqué à l'outil de vissage, de façon à visser la vis 9 dans ce trou.

Lorsque le couple, appliqué à l'outil de vissage, est supérieur à une valeur limite déterminée, lesdits moyens 14, 23 se cassent.

On a pu déterminer que la valeur préférée de ce couple est d'environ 1,2 kg.

Ainsi, une fois que les moyens 14, 23 sont cassés, l'outil de vissage n'est plus en prise avec la vis 9 et aucun couple ou effort de serrage ne peut plus être exercé sur celle-ci. Lorsque la valeur limite est atteinte, la vis 9 est dans une position optimale pour assurer le blocage du dispositif antivol 1 et le maintien de ce blocage tout en évitant le marquage de la branche. Aucun effort supplémentaire de serrage ne pouvant être appliqué, la vis ne peut pas pénétrer dans la branche 4.

On comprend que lorsque la face inférieure de la première ou de la deuxième portion cylindrique 10, 12 est légèrement concave, elle s'écrase plus facilement contre la branche des lunettes et les risques de marquage sont encore diminués.

Lorsque l'on souhaite débloquer le dispositif antivol, notamment après qu'un client a procédé à l'achat de l'objet portant ce dispositif, on utilise un outil particulier pour procéder au desserrage de la vis. Cet outil n'est pas représenté sur les Figures, mais on comprend aisément qu'une de ses extrémités libres doit présenter une forme telle qu'il peut venir en prise avec les cannelures 15, 22 ménagées à la partie supérieure de la vis tandis que l'autre extrémité présente des moyens pour pouvoir exercer un couple sur cet outil. Ainsi, l'outil adapté au desserrage de la vis selon les Figures 3 et 4 comporte seize cannelures dont la forme est complémentaire de celle des cannelures 15, tandis que celui adapté au desserrage de la vis selon la Figure 5 comporte vingt-quatre cannelures dont la forme est également complémentaire de celle des cannelures 22.

On constate que la disposition des cannelures ne permet que le desserrage de la vis de façon à la libérer. Ce système à cannelures évite que, par erreur, on continue à visser la vis 9 dans l'orifice 8 et que l'on puisse ainsi blesser ou marquer la branche 4 des lunettes.

Il a été indiqué précédemment que le diamètre de la vis est de préférence non standard. Ainsi, du fait de la présence des cannelures et du diamètre particulier de la vis, seul un outil, spécialement conçu à cet effet, peut permettre le desserrage de la vis.

Comme le montrent les Figures 1 et 2, le dispositif antivol 1 est de plus conçu pour pouvoir recevoir des supports de formes différentes.

On sait en effet que les dispositifs antivol, notamment pour des lunettes, servent souvent à porter des étiquettes sur lesquelles sont notés par exemple l'identification du produit ou encore son prix, notamment par un système de code-barre. Ce dispositif peut également recevoir des supports de systèmes électro-magnétiques et/ou du type HF (haute fréquence). Ces systèmes comprennent, de façon connue, des capteurs qui déclenchent une alarme lorsque l'objet, portant ce système magnétique, passe devant un portique de détection. On sait que ces systèmes magnétiques présentent des formes très différentes. Il est donc intéressant de disposer de dispositifs antivols sur lesquels ces systèmes magnétiques peuvent s'adapter, quelles que soient leurs formes. De plus, ces systèmes peuvent encore évoluer et les dispositifs antivols doivent pouvoir toujours être compatibles avec eux.

On constate enfin que les utilisateurs des dispositifs antivols souhaitent pouvoir y accrocher des porte-étiquettes, lesquels peuvent présenter également des formes très différentes.

Le dispositif antivol selon l'invention permet, comme on va le voir, de répondre à ces différentes exigences.

En référence à la Figure 1, on voit que la douille 2 présente une rainure 24, sur la face opposée à celle du talon 5, c'est-à-dire la face destinée à être placée du côté extérieur de la lunette. A cette rainure 24, correspondent des éléments d'encliquetage 25, 26 présentant une forme complémentaire. Ces éléments sont placés sur une des faces de supports 27, 28. Ces supports peuvent présenter des formes très différentes, déterminées en fonction des exigences de l'utilisateur.

Des systèmes magnétiques peuvent être incorporés à l'intérieur de ces supports. La face de ces supports, opposée aux éléments d'encliquetage 25, 26, peut également servir de porte-étiquettes.

En référence à la Figure 2, un élément support 29 peut également comporter un système d'encliquetage 30, réalisé en deux parties indépendantes, venant s'enclencher dans deux rainures correspondantes de la douille 2 qui ne sont pas représentées sur la Figure 1. De préférence, ces deux rainures ne débouchent pas à l'extérieur de la douille 2, comme le fait au contraire la rainure 24 illustrée à la Figure 21. Bien entendu, le système d'encliquetage 10 présente une forme correspondant à celle de la rainure pratiquée dans la douille. Ce mode de réalisation présente l'avantage de maintenir invisible, de l'extérieur, le système d'encliquetage 30, comme si la douille 12 et l'élément support 29 étaient réalisés en une seule pièce. Ceci permet de décourager d'éventuelles tentatives d'enlèvement de l'élément support 29.

Dans la description qui précède, on a fait référence à un dispositif antivol destiné à des lunettes. On comprend que les caractéristiques techniques qui ont été décrites s'appliquent également à tout dispositif antivol conçu pour être adapté sur un objet de forme allongée, ce dispositif comprenant une douille présentant une partie centrale évidée dans laquelle peut être passé cet objet et nécessitant des moyens d'immobilisation de la douille par rapport à l'objet à protéger.

Les signes de références insérés après les caractéristiques énoncées dans les revendications ont pour seul but de faciliter la compréhension de ces dernières et ne peuvent avoir en aucun cas pour effet de limiter l'invention aux modes particuliers de réalisation qui viennent d'être décrits.

## Revendications

1. Vis pour le blocage de système antivol destiné à des objets de forme allongée, constitué essentiellement par une douille percée d'un canal, ladite vis comprenant une portion cylindrique d'un premier diamètre présentant un filetage caractérisée en ce qu'un évidement (13) sensiblement cylindrique est pratiqué dans ladite portion cylindrique (10), dans lequel sont prévus des moyens (14, 23) avec lesquels un outil de vissage peut venir en prise, ces moyens se brisant lorsque le couple exercé par cet outil est supérieur à une valeur limite et en ce qu'une pluralité de cannelures (15, 22), permettant exclusivement le dévissage, est disposée autour de l'extrémité libre dudit évidement.

2. Vis selon la revendication 1, caractérisée en ce que lesdits moyens (14, 23) sont constitués par une languette cassante, fixée à une paroi interne dudit évidement (13) et disposée selon un diamètre dudit évidement.

3. Vis selon la revendication 2, caractérisée en ce que ladite languette (23) est réalisée en une seule pièce, fixée en deux points diamétralement opposés dudit évidement (13).

4. Vis selon la revendication 2, caractérisée en ce que ladite languette (14) est réalisée en deux parties (17, 18), chacune d'elle étant fixée par une de leurs extrémités à la paroi interne dudit évidement.

5. Vis selon l'une des revendications 1 à 4, caractérisée en ce que lesdits moyens (14, 23) sont conçus pour se briser lorsque le couple exercé par l'outil de vissage est supérieur à 1,2 kg.

6. Vis selon l'une des revendications 1 à 5, caractérisée en ce qu'elle est réalisée en une matière plastique friable.

7. Vis selon l'une des revendications 1 à 6, caractérisée en ce qu'elle est réalisée en une matière plastique homogène.

8. Vis selon l'une des revendications 6 ou 7, caractérisée en ce qu'elle est réalisée en polystyrène.

9. Vis selon l'une des revendications 1 à 8, caractérisée en ce que ledit premier diamètre n'est pas standard.

10. Vis selon l'une des revendications 1 à 9, caractérisée en ce que les cannelures sont disposées selon un anneau, le diamètre extérieur dudit anneau étant inférieur ou égal audit premier diamètre.

11. Vis selon l'une des revendications 1 à 10, caractérisée en ce que ladite portion cylindrique (10) présente, du côté opposé auxdites cannelures (15, 12), une forme légèrement concave.

12. Vis selon l'une des revendications 1 à 11, caractérisée en ce que ladite portion cylindrique (10) comporte, du côté opposé auxdites cannelures (15, 22), une autre portion cylindrique (12) sensiblement lisse.

13. Vis selon la revendication 12, caractérisée en ce que le diamètre de cette autre portion cylindrique (12) est inférieur ou égal audit premier diamètre.

14. Dispositif antivol pour tout objet de forme allongée, ledit dispositif comprenant une douille dont la partie intérieure est évidée pour permettre le passage dudit objet et des moyens d'immobilisation de ladite douille par rapport audit objet constitués par une vis selon les revendications 1 à 13.

15. Dispositif antivol pour tout objet de forme allongée et présentant une articulation, tel que des lunettes, ledit dispositif comportant une douille enfilée sur la branche des lunettes à bloquer en position ouverte, cette douille étant pourvue d'un talon destiné à prendre appui contre la face postérieure soit de l'oculaire, soit de la façade de la monture et des moyens d'immobilisation de la douille par rapport à cette branche, de manière à ce que ce talon empêche le repliement de celle-ci, ces moyens d'immobilisation étant constitués par un organe mobile entre une position inactive et une position active dans laquelle son extrémité vient directement s'appliquer contre ladite branche, caractérisé en ce que ledit organe est constitué par une vis selon les revendications 1 à 13.

16. Dispositif antivol selon la revendication 15, caractérisé en ce que ladite douille (2) comporte, sur la face opposée à celle du talon (5), une rainure (24) destinée à recevoir les éléments d'encliquetage (25, 26, 30) de supports (27, 28, 29).

## Patentansprüche

1. Schraube zur Blockierung eines Diebstahlsicherungssystems für Objekte mit langgestreckter Form, das im wesentlichen aus einem von einem Kanal durchsetzten Rohrteil besteht, wobei die Schraube einen zylindrischen Abschnitt mit einem ersten Durchmesser aufweist, welcher ein Gewinde trägt, dadurch gekennzeichnet, daß eine im wesentlichen zylindrische Ausnehmung (13) in den genannten zylindrischen Abschnitt (10) eingebracht ist, in welcher Einrichtungen (14, 23) vorgesehen sind, mit denen ein Schraubwerkzeug in Eingriff gelangen kann, wobei diese Einrichtungen (14, 23) abbrechen, wenn das vom Werkzeug ausgeübte Drehmoment einen vorgegebenen Wert überschreitet, und daß um den freien Rand der genannten Ausnehmung eine Vielzahl von Riefungen oder Zähnen (15, 22) angeordnet sind, die ausschließlich ein Herausschrauben ermöglichen.

2. Schraube nach Anspruch 1, dadurch gekennzeichnet, daß die Einrichtungen (14, 23) durch eine zerbrechliche Zunge gebildet sind, die an einer Innenwand der genannten Ausnehmung (13) angebracht ist und längs eines Durchmessers der Ausnehmung verläuft.

3. Schraube nach Anspruch 2, dadurch gekennzeichnet, daß die Zunge (23) einstückig ausgebildet und an zwei einander diametral gegenüberliegenden Punkten der genannten Ausnehmung (13) befestigt ist.

4. Schraube nach Anspruch 2, dadurch gekennzeichnet, daß die Zunge (14) in zwei Abschnitten (17, 18) realisiert ist, von denen jeder an einem seiner Enden an der Innenwand der Ausnehmung befestigt ist.

5. Schraube nach einem der Ansprüche 1 bis 4, dadurch gekennzeichnet, daß die Einrichtungen (14, 23) so ausgebildet sind, daß sie zerbrechen, wenn das vom Drehwerkzeug ausgeübte Drehmoment oberhalb 1,2 kg liegt.

6. Schraube nach einem der Ansprüche 1 bis 5, dadurch gekennzeichnet, daß sie aus einem zerbrechlichen Kunststoffmaterial besteht.

7. Schraube nach einem der Ansprüche 1 bis 6, dadurch gekennzeichnet, daß sie aus homogenem Kunststoffmaterial ausgebildet ist.

8. Schraube nach Anspruch 6 oder 7, dadurch gekennzeichnet, daß sie aus Polystyren besteht.

9. Schraube nach einem der Ansprüche 1 bis 8, dadurch gekennzeichnet, daß der genannte erste Durchmesser von Standard-Schraubendurchmessern abweicht.

10. Schraube nach einem der Ansprüche 1 bis 9, dadurch gekennzeichnet, daß die Riefungen oder Zähnungen auf einem Ring angeordnet sind, wobei der äußere Durchmesser des Rings gleich oder kleiner dem genannten ersten Durchmesser ist.

11. Schraube nach einem der Ansprüche 1 bis 10, dadurch gekennzeichnet, daß der genannte zylindrische Abschnitt (10) auf der den Riefungen (15, 22) gegenüberliegenden Seite leicht konkav gewölbt ausgebildet ist.

12. Schraube nach einem der Ansprüche 1 bis 11, dadurch gekennzeichnet, daß der genannte Zylinderabschnitt (10) auf der den Riefungen (15, 22) gegenüberliegenden Seite einen weiteren, im wesentlichen glatten zylindrischen Abschnitt (12) aufweist.

13. Schraube nach Anspruch 12, dadurch gekennzeichnet, daß der Durchmesser des zweiten zylindrischen Abschnitts (12) kleiner oder gleich dem genannten ersten Durchmesser ist.

14. Diebstahlsicherungsvorrichtung für ein langgestrecktes Objekt, umfassend eine Hülse, deren Innenteil ausgehöhlt ist, um das genannte Objekt durchstecken zu können und mit Einrichtungen zum Verriegeln der Hülse auf dem genannten Gegenstand, die aus einer Schraube nach einem der Ansprüche 1 bis 13 bestehen.

15. Diebstahlsicherungsvorrichtung für ein langgestrecktes Objekt mit einem Gelenk, wie beispielsweise Brillen, wobei die Vorrichtung eine auf den Bügel der zu blockierenden Brille in offenem Zustand aufgefädelte Hulse umfaßt, wobei diese Hülse mit einem Ansatz versehen ist, der dazu bestimmt ist, sich an der Rückfläche entweder des Brillenglases oder der Fassade der Brillenfassung abzustützen, sowie mit Verriegelungseinrichtungen der Hülse auf dem Bügel, derart, daß der Ansatz das Zusammenfalten des Bügels verhindert, wobei die Verriegelungseinrichtungen aus einem beweglichen Organ bestehen, welches zwischen einer inaktiven Stellung und einer aktiven Stellung verschiebbar ist, in welcher sein Ende im direkten Kontakt mit dem Bügel steht, dadurch gekennzeichnet, daß das genannte Verriegelungsorgan aus einer Schraube nach einem der Ansprüche 1 bis 13 besteht.

16. Diebstahlsicherungsvorrichtung nach Anspruch 15, dadurch gekennzeichnet, daß die Hülse (2) auf der dem Ansatz (5) gegenüberliegenden Seite eine Rinne (24) aufweist, die dazu bestimmt ist, Einsprengglieder (25, 26, 30) von Stützteilen (27, 28, 29) aufzunehmen.

## Claims

1. Screw for an anti-theft locking system designed for objects having an elongate form, consisting substantially of a sleeve pierced by a duct, the screw comprising a cylindrical section with a first diameter having a thread, characterised in that a substantially cylindrical recess (13) is provided in the cylindrical section (10) in which there are means (14, 23) with which a screwing tool can engage, these means breaking when the torque exerted by this tool is greater than a limit value, and in that a plurality of grooves (15, 22) enabling unscrewing only to take place, is disposed about the free end of the recess.

2. Screw according to Claim 1, characterised in that the means (14, 23) comprise a breakable tab, attached to an inner wall of the recess (13) and disposed on a diameter of the recess.

3. Screw according to Claim 2, characterised in that the tab (23) consists of a single piece attached at two diametrically opposed points of the recess (13).

4. Screw according to Claim 2, characterised in that the tab (14) consists of two pieces (17, 18) each attached by one of their ends to the inner wall of the recess.

5. Screw according to any one of Claims 1 to 4, characterised in that the means (14, 23) are designed to break when the torque exerted by the screwing tool is greater than 1.2 kg.

6. Screw according to any one of Claims 1 to 5, characterised in that it is made of a brittle plastics material.

7. Screw according to any one of Claims 1 to 5, characterised in that it is made of a homogeneous plastics material.

8. Screw according to either of Claims 6 or 7, characterised in that it is made of polystyrene.

9. Screw according to any one of Claims 1 to 8, characterised in that the first diameter is not standard.

10. Screw according to any one of Claims 1 to 9, characterised in that the grooves are disposed about a ring, the outer diameter of the ring being less than or equal to the first diameter.

11. Screw according to any one of Claims 1 to 10 characterised in that on the side opposite the grooves (15, 12) the cylindrical section (10) has a slightly concave form.

12. Screw according to any one of Claims 1 to 11, characterised in that on the side opposite the grooves (15, 22), the cylindrical section (10) has another cylindrical section (12) which is substantially smooth.

13. Screw according to Claim 12, characterised in that the diameter of this other cylindrical section (12) is less than or equal to the first diameter.

14. Anti-theft device for any object having an elongate form, comprising a sleeve of which the inner part is hollow in order to enable the object to pass through it, and means of immobilising the socket relative to the object, comprising a screw according to Claims 1 to 13.

15. Anti-theft device for any object having an elongate form and which has an articulated member, such as spectacles, comprising a sleeve slipped onto a side piece of the spectacles and locking it in the open position, this sleeve having a clip intended to abut the rear surface either of the eyepiece or of the front of the frame, and means of immobilising the sleeve relative to the side piece, such that the clip prevents the latter from turning back, these immobilisation means consisting of a unit displaceable between an inactive position and an active position in which the end thereof is applied directly against this side piece, characterised in that the unit comprises a screw according to Claims 1 to 13.

16. Anti-theft device according to Claim 15, characterised in that on its surface opposite that of the clip (5), the sleeve (2) comprises a slot (24) intended to receive the snap-on components (25, 26, 30) of supports (27, 28, 29).
